# EUROPEAN PATENT APPLICATION

(11) **EP 4 699 785 A1**
(43) Date of publication of application: **25.02.2026**
(21) Application number: 24791884.0
(22) Date of filing: 09.04.2024
(51) Int. Cl.: B29C 64/118, B29C 64/393, B33Y 10/00, B33Y 50/02

(54) **METHOD FOR MANUFACTURING PLATE HAVING THREE-DIMENSIONAL WOOD GRAIN ON SURFACE**

(30) Priority: 18.04.2023 CN 202310414299
(71) Applicant: Hangzhou Print Flooring Technology Co., Ltd., Hangzhou, Zhejiang 311200 (CN)
(72) Inventor: YANG, Guocui, Hangzhou, Zhejiang 311200 (CN); LEI, Zhongshan, Hangzhou, Zhejiang 311200 (CN); DENG, Mengde, Hangzhou, Zhejiang 311200 (CN); HUANG, Donghui, Hangzhou, Zhejiang 311200 (CN); AO, Fangbing, Hangzhou, Zhejiang 311200 (CN); HUANG, Feng, Hangzhou, Zhejiang 311200 (CN)
(74) Representative: Garavelli, Paolo
(86) International application number: PCT/CN2024/086836
(87) International publication number: WO 2024/217299

(57) **Abstract**

The present invention relates to the field of surface structure preparation, particularly to a method for manufacturing a board having a three-dimensional wood grain on the surface thereof, which comprises at least the following steps: obtaining a wood grain pattern and processing it to extract a wood surface database, the database including at least an underlying wood grain printing dataset and a three-dimensional wood grain printing dataset. The first printing device outputs on the surface of the board using the underlying wood grain printing dataset to obtain an underlying wood grain layer matching the wood grain pattern, and the second printing device outputs wood grain precursor liquid above the underlying wood grain layer using the three-dimensional wood grain printing dataset to obtain a wood grain precursor matching the wood grain texture. The present application, through the corresponding matching relationship between the underlying wood grain printing dataset and the three-dimensional wood grain printing dataset, can obtain a three-dimensional wood grain layer completely corresponding to the underlying wood grain layer on the surface of the board, thereby effectively improving the alignment accuracy between the two.

## Description

### TECHNICAL FIELD

The present invention relates to the field of surface structure preparation, particularly to a method for manufacturing a board having a three-dimensional wood grain on the surface thereof.

### BACKGROUND ART

Currently in the field of board manufacturing, manufacturers can create products that are visually and tactilely similar to natural wood based on artificial boards or non-wooden boards by using advanced technologies and materials. These products are expected to have better performance and durability, thereby meeting consumers' demands for high-quality, low-maintenance, and low-cost products. In addition, these products similar to natural wood can also reduce dependence on natural resources, thereby protecting the environment and promoting sustainable development.

In order to obtain a texture similar to natural wood on the surface of artificial boards or non-wooden boards, manufacturers usually adopt the following methods:
1. Printing technology: using high-resolution printing technology to print the texture pattern of natural wood onto the surface of the board;
2. Thin wood veneer: pasting thin wood boards onto the surface of the board to imitate the appearance and texture of natural wood;
3. Coating technology: forming textures and colors similar to natural wood on the surface of the board through special coating processes.

Although these methods can imitate the appearance and texture of natural wood to a certain extent, they also have certain defects. For example: printing technology cannot completely replicate the texture of natural wood; thin wood veneer is prone to moisture absorption and cracking; coating technology may have adverse effects on the environment.

The patent with publication number CN 101659073 B discloses a wood grain processing process for the surface of a waterproof floor substrate, which involves printing simulated wood grain on the surface of a wood-plastic floor, followed by adding a wear-resistant layer over the simulated wood grain, thereby protecting the wood grain pattern and maintaining the wood grain texture effect for a long time. However, such boards that merely have two-dimensional planar images printed on the surface can no longer meet people's demand for more realistic visual and tactile combined experiences.

Therefore, forming a three-dimensional wood grain on the surface of a board that corresponds to a two-dimensional planar image and has a texture closer to that of wood is a current focus of widespread attention in the art.

In the prior art, in order to form a three-dimensional structure on the surface of a substrate, various different technical solutions have been proposed, and conventional methods usually include three types: embossing method, upward stacking method, and downward embossing method.

The traditional embossing method involves reproducing the structure to be printed on the board by pressing with a mold, roller, or belt. The method can be implemented by pressurizing on uncured resin, thermoplastic material, or photocrosslinkable resin and simultaneously performing radiation and photopolymerization.

Technologies related to the embossing method can be referred to the following patents:
The patent with publication number CN115027117A discloses an enhanced wood texture floor, including a foamed core having a shell and attachments distributed on the surface of the shell, the shell being formed of a first color resin, and the attachments being formed of a second color resin. During the preparation process, embossing is performed through an embossing roller, thereby pressing a portion of the second color resin layer into the surface of the shell, such that the shell and the second color resin layer together present a wood texture.

The patent with publication number CN115122452A discloses a method for manufacturing high-fidelity precious wood species flooring, which includes engraving 3D textures on a steel plate of a flat press or on a roller of a roller coating machine using laser engraving, and then pressing the textures onto a blank to produce aesthetically high-end wood flooring with high-fidelity precious wood species wood grain textures.

The upward stacking method is based on resin materials, and layers are stacked upward layer by layer through printing or printing, thereby ultimately forming a floor having a three-dimensional structure in the process of continuous stacking.

Technologies related to the upward stacking method can be referred to the following patents:
The patent with publication number CN 112455110 A discloses a process for producing wood flooring by inkjet printing. This patent enables continued printing of additive-type ink on the surface of the printed pattern texture, thereby forming a convex three-dimensional wood grain on the surface of the pattern texture.

The downward embossing method involves spraying a layer of polymerization inhibitor substance that hinders or delays the polymerization of the uncured resin on the surface of the uncured resin. After the subsequent curing treatment of the resin, the portion of the resin containing the polymerization inhibitor remains in a liquid state, and these liquid-state resins can be brushed downward in the subsequent treatment process to form a concave three-dimensional structure.

Technologies related to the downward embossing method can be referred to the following patents:
The patent with publication number CN 110177691 B discloses a method and apparatus for producing embossed patterns on a substrate using digital printing technology, the method involving applying embossing liquid on a non-polymerized resin layer, followed by UV curing for subsequent polymerization of the resin, and then removing the embossing liquid to form a three-dimensional surface.

The patent with publication number CN 112739463 A discloses a new method and apparatus for producing a surface structure, including the following steps: A) applying resin A to the surface of a material; B) when the resin A is in a liquid state or partially cured, applying liquid B to at least a portion of the resin A; C) polymerizing the resin A and the liquid B respectively; D) removing the polymerized liquid B.

The patent with publication number CN 112996649 A discloses a method for manufacturing a three-dimensional structure on the surface of a flat substrate, the substrate produced thereby, and an apparatus for producing the substrate according to the method, which involves pre-dropping a material for forming wood grain grooves on the surface of the substrate, then applying a curable resin to areas of the substrate surface not covered by the material for forming wood grain grooves, curing the resin, and then removing the material for forming wood grain grooves, thereby forming wood grain grooves in the cured resin.

Currently, the degree of similarity between a three-dimensional wood grain and a natural wood grain is usually evaluated by considering the following dimensions: (1) the similarity in width, narrowness, and depth of the three-dimensional wood grain to the natural wood grain; (2) the degree of correspondence between the three-dimensional wood grain and the underlying two-dimensional planar structure. However, regardless of whether the embossing method, the upward stacking method, or the downward embossing method is adopted, each has unavoidable defects. For example, the main focus in the prior art disclosed above is on how to form a three-dimensional wood grain with a higher degree of similarity to the natural wood grain, that is, the prior art can only address the first dimension described above. Regarding how to better correspond the three-dimensional wood grain to the underlying two-dimensional planar structure, the above prior art does not provide a good solution, so defects such as misalignment are easily caused in the board manufacturing process, ultimately leading to problems where the visual and tactile effects do not match. In addition, in the process of preparing floors with three-dimensional structures using the embossing method, the mold often experiences wear during operation, so the service life of the mold is short, there are differences in the surface structures of floors between different batches, and the floor manufacturing cost is higher.

Therefore, in order to obtain a three-dimensional wood grain with a higher degree of similarity to the natural wood grain, it is not only necessary to consider how to prepare a three-dimensional structure more similar to the natural wood grain structure, but more importantly, to consider how to correspond the three-dimensional structure to the underlying two-dimensional planar image. Only by simultaneously considering the forming effect of the three-dimensional structure and the correspondence between the three-dimensional structure and the underlying two-dimensional planar image is the key to obtaining a texture similar to natural wood on the surface of artificial boards or non-wooden boards. However, no related precedents have been seen in the currently disclosed technologies.

### SUMMARY OF THE INVENTION

The present invention is intended to overcome the defect in the prior art where it is difficult to match the three-dimensional wood grain formed on the surface of a board with the underlying printed image, and provides a method for manufacturing a board having a three-dimensional wood grain on the surface thereof, effectively solving the problem of inaccurate alignment between the three-dimensional wood grain and the underlying printed image.

To achieve the above invention object, the present invention is implemented through the following technical solutions:
In a first aspect, the present invention first provides a method for manufacturing a board having a three-dimensional wood grain on the surface thereof, which comprises at least the following steps:
(S.1) obtaining wood grain information and processing the information to generate a wood surface database;
the database including at least an underlying wood grain printing dataset and a three-dimensional wood grain printing dataset;
wherein the three-dimensional wood grain printing dataset includes a two-dimensional three-dimensional wood grain printing shape data subset corresponding to the underlying wood grain printing dataset and a three-dimensional wood grain printing depth data subset corresponding to the three-dimensional wood grain printing shape data subset;
(S.2) assigning the underlying wood grain printing dataset to a first printing device;
assigning the three-dimensional wood grain printing dataset to a second printing device;
(S.3) using the first printing device to output on the surface of the board using the underlying wood grain printing dataset, to obtain an underlying wood grain layer matching the wood grain information;
(S.4) using the second printing device to output wood grain precursor liquid using the three-dimensional wood grain printing dataset, to obtain a wood grain precursor for forming a three-dimensional wood grain matching the underlying wood grain layer, and the height of the wood grain precursor (i.e., the distance between the upper end surface and the lower end surface of the wood grain precursor) corresponding to different three-dimensional wood grain printing depth data subsets.

After extensive and in-depth research on natural wood boards, the applicant of the present invention has found that: due to differences in wood species and growth environments, the color, wood grain shape, and three-dimensional structure of the wood surface presented by the wood also vary to different degrees. This leads to different visual and tactile effects that each natural wood board can present. Based on this discovery, in order to form a more realistic three-dimensional wood grain on the surface of an artificial board, it is necessary to consider the similarity in the planar two-dimensional structure to the natural wood grain visually and the similarity in the three-dimensional structure to the natural wood grain both visually and tactilely.

In the prior art, there are many methods for forming a two-dimensional underlying wood grain layer on the surface of an artificial board, such as printing processes and high-precision printing processes, which can well restore the color and wood grain pattern of real natural wood materials, thereby making these patterns closer to the natural wood grain in visual effect. However, how to obtain a three-dimensional wood grain above the underlying wood grain layer that has a shape adapted to the underlying wood grain layer and a hand feel close to the natural wood grain is a difficulty in the art.

Generally speaking, in order to form a three-dimensional wood grain on the surface of a board, it is first necessary to refer to the shape of the two-dimensional underlying wood grain layer to be printed and model the board to be printed based on the two-dimensional underlying wood grain layer, so that the printing device can print according to the established three-dimensional model, thereby obtaining a three-dimensional wood grain corresponding to the wood grain shape and length, width, and depth of the target model. Therefore, in this mode, a three-dimensional model can only correspond to a board having a specific two-dimensional underlying wood grain layer. If any variable in forming the board needs to be changed individually, the model needs to be redrawn and adjusted, resulting in poor flexibility of the above method for forming a three-dimensional wood grain, making it difficult to make adaptive adjustments to the board in a short time, and the production cost is relatively high. Therefore, companies using this traditional method to prepare boards having a three-dimensional wood grain on the surface usually have a relatively single product line, which cannot meet the demand for customized production according to customer requirements.

In order to overcome the above defects in the prior art, the applicant of the present invention conducted further in-depth research on the planar underlying wood grain layer and the three-dimensional wood grain respectively. Among them, after researching the planar underlying wood grain layer, the applicant found that: the elements for forming the underlying wood grain layer usually include the background color of the wood grain and the wood grain shape provided on the wood grain background color, and usually only need to combine the wood grain background color and the wood grain shape with each other to form a wood grain pattern matching different wood materials. After in-depth research on the three-dimensional wood grain, the applicant found that: the elements for forming the three-dimensional wood grain usually include the wood grain shape and the depth corresponding to different wood grain shapes. When the wood grain shape is combined with different depth information, a three-dimensional wood grain closer to the natural wood grain structure can be composed.

Therefore, based on the above discovery, compared with the prior art, the present invention analyzes and processes information containing natural wood grain, thereby classifying and organizing the formation parameters related to the natural wood grain, to obtain the underlying wood grain printing dataset and the three-dimensional wood grain printing dataset. Among them, the underlying wood grain printing dataset records data information for controlling the formation of the underlying wood grain layer, while the three-dimensional wood grain printing dataset records data information for controlling the formation of the three-dimensional wood grain. Moreover, in the present application, the three-dimensional wood grain printing dataset includes a two-dimensional three-dimensional wood grain printing shape data subset corresponding to the underlying wood grain printing dataset. Therefore, once the relevant information for printing the underlying wood grain layer is determined, the three-dimensional wood grain shape data adapted to the shape and size of the underlying wood grain layer can be selected from the two-dimensional three-dimensional wood grain printing shape data subset, thereby effectively achieving the correspondence of the shape and position between the underlying wood grain layer and the top three-dimensional wood grain, avoiding the problem of inaccurate alignment between the two.

In addition, after the three-dimensional wood grain shape is determined, by calling the three-dimensional wood grain printing depth data subset, one or more wood grain depths are assigned to each different shape of wood grain, thereby achieving that three-dimensional wood grains of different shapes can correspond to different depths, and the depth can change with different shapes of three-dimensional wood grain, thereby being more adapted to the natural wood grain structure, making the similarity between the obtained three-dimensional wood grain and the natural wood grain higher.

Therefore, through the method described in the present application, a three-dimensional wood grain similar to that of a natural wood board can be obtained on the surface of an artificial or non-wooden board, and by digitizing and processing the wood grain information, the underlying wood grain layer and the three-dimensional wood grain above the underlying wood grain layer can be strictly corresponded during the printing process, thereby overcoming the problem of difficulty in "alignment" in the prior art.

Finally, this method in the present application also has the advantage of high flexibility. Compared with the prior art, the three-dimensional wood grain in the present application does not require three-dimensional modeling of a single underlying wood grain layer, and only needs to analyze the wood grain shape contained in the underlying wood grain layer, retrieve it from the three-dimensional wood grain printing shape data subset of the three-dimensional wood grain printing dataset through the wood grain shape, and match the shape data recorded in the three-dimensional wood grain printing shape data subset with the depth data recorded in the three-dimensional wood grain printing depth data subset, thereby creating a three-dimensional wood grain closer to the natural wood grain, effectively simplifying the construction process of the three-dimensional wood grain, enabling production enterprises to perform customized production of products according to customer needs, expanding the richness of the enterprise's product line, effectively reducing production costs, and improving production efficiency.

Preferably, the wood grain information can be obtained by scanning a natural wood board, wherein the data in the underlying wood grain printing dataset can be obtained by a high-resolution optical scanner, and the wood grain depth information can be obtained by equipment such as a laser profilometer.

Preferably, the underlying wood grain printing dataset includes a plurality of underlying wood grain printing background color data subsets and a plurality of underlying wood grain printing shape data subsets.

The underlying wood grain printing dataset in the present invention includes an underlying wood grain printing background color data subset, which is used to print the wood background colors presented by different wood materials. For example, in the process of printing fir and spruce, the background color is light yellow, while linden wood, white sal double, yellow paulownia, and other woods have a yellowish-white background color; locust tree, yellow wood, zelkova, and mulberry tree have a brown background color; red fir, red pine, cryptomeria, and camphor wood have a reddish-brown background color; rosewood, Indian rosewood, and Indian rosewood have a dark purplish-red background color; ebony has a black background color. Therefore, by calling the data in the underlying wood grain printing background color data subset, the background colors of natural woods with different colors can be simulated. The underlying wood grain printing shape data subset can record information of wood grains with different shapes, for example, the underlying wood grain printing shape data subset can record annular annual rings, semi-ring hole structures, strip structures, ripple structures, tree knot textures, etc., so that data in the underlying wood grain printing shape data subset can be randomly called to simulate wood grain structures of natural woods with different shapes.

In this way, a huge number of underlying wood grain layer styles can be combined through mutual matching between the wood grain printing background color data subset and the underlying wood grain printing shape data subset, thereby greatly meeting the customized needs of customers.

Preferably, the underlying wood grain printing background color data subset includes a plurality of background color printing point coordinate data, each background color printing point coordinate data being marked with color information, and the first printing device performs printing based on the background color printing point coordinate data and the color information corresponding to the background color printing point coordinate data.

In the present invention, the background color printing point coordinate data in the underlying wood grain printing background color data subset records the color information of each coordinate point on the surface of the board, and then the first printing device outputs row by row based on the color information of each coordinate point of each point, thereby obtaining the wood grain background color matching the natural wood grain.

Preferably, the underlying wood grain printing shape data subset includes a plurality of sets of a plurality of two-dimensional planar wood grain printing coordinate data for printing wood grains, each planar wood grain printing coordinate data being marked with color information, the first printing device performs printing based on the planar wood grain printing coordinate data and the color information corresponding to the planar wood grain printing coordinate data, and each underlying wood grain printing shape data subset corresponds to one underlying wood grain printing path.

The underlying wood grain printing shape data subset in the present invention includes a plurality of two-dimensional planar wood grain printing coordinate data for printing wood grains, which also corresponds to color information, and this color information should be different from the wood grain background color, so that the planar wood grain can be distinguished from the background color, thereby enabling the wood grain to be displayed on the surface of the background color. At the same time, since the two-dimensional planar wood grain printing coordinate data records the coordinates of each point constituting the wood grain, the first printing device can print and output the wood grain based on these planar wood grain printing coordinate data.

Preferably, the colors in the underlying wood grain printing background color data subset and the underlying wood grain printing shape data subset are obtained by superimposing at least one or more standard colors.

Preferably, the standard colors include at least red, blue, light red, yellow, black, and light black.

Preferably, the printing resolution of the background color printing point coordinate data and the planar wood grain printing coordinate data is at least 100 DPI.

The applicant of the present invention has found that the printing resolution of the background color printing point coordinate data and the planar wood grain printing coordinate data in the process of being assigned to the first printing device for output has a significant impact on the visual effect of the final underlying wood grain layer. When the printing resolution is less than 100 DPI, the display effect after printing is relatively blurry and cannot well display the wood grain effect.

Preferably, the three-dimensional wood grain printing shape data subset includes a plurality of two-dimensional three-dimensional wood grain printing coordinate data for printing wood grains, each three-dimensional wood grain printing shape data subset corresponding to one three-dimensional wood grain printing path, and a plurality of three-dimensional wood grain printing paths respectively coinciding with a plurality of underlying wood grain printing paths.

The two-dimensional three-dimensional wood grain printing coordinate data included in the three-dimensional wood grain printing shape data subset in the present application also records the planar coordinates of each point constituting the three-dimensional wood grain, and it can correspond to the coordinate information recorded in the underlying wood grain printing shape data subset in the underlying wood grain printing dataset on a two-dimensional plane. Therefore, after determining the planar wood grain coordinate information recorded in the underlying wood grain printing shape data subset and the three-dimensional wood grain printing coordinate data recorded in the three-dimensional wood grain printing shape data subset, the second printing device can output and print along the established printing path, thereby completing the alignment process between the three-dimensional wood grain and the underlying wood grain layer.

Preferably, the three-dimensional wood grain printing shape data subset includes printing depth data for each three-dimensional wood grain printing coordinate data.

Preferably, in the step (S.1), the wood grain information processing includes at least one of the following operations:
geometric transformation, correction of color and/or brightness and/or contrast, removal of unnecessary image elements, image skew, image distortion.

Preferably, the board includes wood-plastic board, stone-plastic board, wood board, metal board, or other types of artificial boards.

Preferably, after the step (S.4), it further includes the following step:
curing the wood grain precursor, thereby forming a three-dimensional wood grain layer on the surface of the underlying wood grain layer.

As described in the background art, there are multiple methods for preparing the three-dimensional wood grain layer. In some preferred embodiments of the application, the upward stacking method can be adopted to form the three-dimensional wood grain layer on the surface of the underlying wood grain layer. In this way, the curable wood grain precursor liquid can be continuously stacked upward to form a wood grain precursor with varying depths and lengths and widths that are not fixed. At this time, only the wood grain precursor needs to be cured, and the cured wood grain precursor can become the three-dimensional wood grain layer. The curing method of the wood grain precursor depends on the physical and chemical properties of the applied wood grain precursor liquid. If the wood grain precursor liquid contains a thermosetting resin, the wood grain precursor can be cured by thermosetting during the curing process. If the wood grain precursor liquid contains a photocurable resin, ultraviolet light can be applied to the wood grain precursor under the conditions of a photoinitiator to initiate the curing of the wood grain precursor. Generally speaking, the photopolymerization method has higher curing efficiency, thereby effectively improving the forming efficiency of the three-dimensional wood grain layer.

Preferably, the wood grain precursor includes at least a photocurable resin; and
a photoinitiator for initiating polymerization of the photocurable resin.

Preferably, the photocurable resin contained in the wood grain precursor liquid includes acrylic resin, epoxy resin, or other photocurable resins.

Preferably, between the step (S.3) and the step (S.4), it further includes an intermediate step, the intermediate step including:
applying a curable liquid resin over the underlying wood grain layer, thereby forming a liquid resin layer;
in the step (S.4), the wood grain precursor liquid is applied to the upper surface of the liquid resin layer, thereby causing the wood grain precursor liquid and/or at least a portion of the liquid resin mixed with the wood grain precursor liquid and/or at least a portion of the liquid resin covered by the wood grain precursor liquid to form the wood grain precursor.

Preferably, the wood grain precursor liquid includes at least a polymerization inhibitor for preventing or delaying polymerization of the curable liquid resin.

Preferably, after the step (S.4), it further includes the following steps:
curing the liquid resin other than the wood grain precursor formed in the previous step;
removing the wood grain precursor, thereby forming a three-dimensional wood grain layer on the surface of the underlying wood grain layer.

As described above, in addition to the above upward stacking method, the formation of the three-dimensional wood grain layer also includes the downward embossing method. Compared with the upward stacking method, the downward embossing method has controllable texture width and longer depth, so its stereoscopic effect is stronger. At the same time, no wood grain deformation occurs during the printing process, so the printing accuracy is higher.

In the prior art, the step of applying wood grain precursor liquid in an incompletely cured resin layer has been used. However, from the actual test results, due to the high viscosity of the incompletely cured resin layer itself, the wood grain precursor liquid is difficult to enter the resin layer. This brings the following problems: (1) The depth of the wood grain precursor liquid entering the interior of the resin layer is low, resulting in a low depth of the final wood grain, making the overall stereoscopic effect of the three-dimensional wood grain layer poor; (2) Due to the high viscosity of the incompletely cured resin layer, the wood grain precursor liquid is more likely to accumulate on the surface of the incompletely cured resin layer after application, making the wood grain precursor liquid more likely to diffuse on the surface of the resin layer, so that the shape and width of the final formed wood grain are difficult to match the underlying wood grain layer below, thereby causing the problem of inaccurate alignment; (3) The incompletely cured resin layer has weak fluidity, so it is difficult to co-mix with the wood grain precursor liquid in a short time, resulting in more blurred and less sharp edges of the formed three-dimensional wood grain layer, thereby having obvious differences from the natural wood grain structure; (4) Due to the high viscosity of the incompletely cured resin layer itself, even after mixing with the wood grain precursor liquid, the obtained wood grain precursor has relatively high viscosity. Although the wood grain precursor cannot be completely cured in the subsequent curing process, its viscosity can still be improved to a certain extent, so these high-viscosity wood grain precursors are difficult to be completely removed in the subsequent mechanical removal process, so there is often some residue, further leading to the problem of unclear and blurry wood grain texture, making the texture differ further from the actual natural wood material.

Therefore, in addition to adopting a pretreatment step in the preparation process, the present invention also adopts a technical solution of directly applying the wood grain precursor liquid to the surface of the uncured liquid resin during the pretreatment step process. Compared with applying the wood grain precursor liquid to the semi-cured resin layer, by changing this step, it can bring the following beneficial effects: (1) Since the uncured liquid resin has low viscosity itself, its fluidity is good, and after the wood grain precursor liquid is applied to the uncured liquid resin, it can smoothly enter downward into the uncured liquid resin, thereby greatly improving the depth of the prepared wood grain and effectively improving the stereoscopic effect of the three-dimensional wood grain layer. (2) At the same time, since the wood grain precursor liquid can penetrate downward into the interior of the uncured liquid resin, it avoids the diffusion of the wood grain precursor liquid on the surface of the uncured liquid resin, so that the shape and width of the finally formed wood grain can match the ink layer below, thereby effectively improving the alignment accuracy. (3) Due to the good mixing effect between the uncured liquid resin and the wood grain precursor liquid, the edges of the wood grain precursor liquid or the wood grain precursor obtained by mixing the wood grain precursor liquid with the uncured liquid resin are more neat and sharp, so the prepared three-dimensional wood grain layer is closer to the natural wood grain. (4) Since the wood grain precursor liquid or the wood grain precursor obtained by mixing the wood grain precursor liquid with the uncured liquid resin still has low viscosity after curing, it is easier to remove after curing, and no residue is generated after removing the wood grain precursor, so the formed wood grain is cleaner and the edges are sharper.

Preferably, immediately after the end of the step (S.3), it further includes a pretreatment step, the pretreatment step including:

covering at least a portion of the surface above the underlying wood grain layer with a curable liquid resin, and curing at least a portion of the curable liquid resin on the surface of the underlying wood grain layer to form a three-dimensional wood grain substrate.

In the conventional process of forming a three-dimensional wood grain using the downward embossing method, the removal of the wood grain precursor to obtain the three-dimensional wood grain layer will cause exposure of a portion of the underlying wood grain layer, and this exposed portion of the underlying wood grain layer is easily worn or even peeled off by external forces. Therefore, in the process of mechanically removing the wood grain precursor, the depth of downward removal needs to be considered to prevent wear of the underlying wood grain layer, resulting in difficulty in increasing the depth of the three-dimensional wood grain layer.

In the process of preparing the three-dimensional structure in the present invention, a three-dimensional wood grain substrate obtained by curing a layer of curable liquid resin is first covered on the surface of the underlying wood grain layer, and then the three-dimensional wood grain layer is formed again on the surface of the three-dimensional wood grain substrate. Due to the existence of the three-dimensional wood grain substrate, during the process of removing the wood grain precursor and forming the three-dimensional wood grain layer, the underlying wood grain layer will not be exposed, but will be covered by the three-dimensional wood grain substrate, so the underlying wood grain layer will not be worn or peeled off due to external forces. Therefore, the maximum downward excavation can be performed in the process of mechanically removing the wood grain precursor, thereby ensuring that the depth of the three-dimensional wood grain layer can be effectively increased.

In addition, in order to make the board containing the three-dimensional wood grain prepared by the present invention have a texture similar to natural wood, in addition to considering the wear of the underlying wood grain layer and the depth of the three-dimensional wood grain layer, it is also necessary to consider the correspondence between the bottom underlying wood grain layer and the upper three-dimensional wood grain layer, that is, the alignment problem between the two. Regarding the alignment problem, the applicant has found that the following influencing factors will cause defects of inaccurate alignment between the underlying wood grain layer and the upper three-dimensional wood grain layer: (1) deformation of the three-dimensional wood grain layer or the underlying wood grain layer caused by the shrinkage of the curable liquid resin material itself during the curing process in the preparation process of the upper three-dimensional wood grain layer; (2) insufficient compatibility between the wood grain precursor liquid and the curable liquid resin during the preparation process of the three-dimensional wood grain layer, resulting in the depth, width, and edge morphology of the three-dimensional wood grain layer not matching expectations. The applicant has found that only by considering the above two factors simultaneously can a texture similar to natural wood be truly obtained.

Regarding influencing factor (1), the applicant has found that during the curing process of the curable liquid resin, since the energy (UV or heat) used to cure the curable liquid resin is usually input from above the liquid resin, the upper liquid resin will cure first, while the lower liquid resin will cure later. Since the liquid resin often accompanies a certain volume shrinkage during the curing process, certain internal stresses are generated, and these internal stresses will accumulate downward, reaching a maximum value at the bottom of the liquid resin. If the liquid resin is in direct contact with the underlying wood grain layer at this time, once the maximum internal stress is greater than the bonding force between the underlying wood grain layer and the board surface, it will cause slippage between the underlying wood grain layer and the board surface, thereby making it difficult for the underlying wood grain layer at the bottom and the three-dimensional wood grain above to correspond, resulting in the problem of inaccurate alignment, which seriously affects the visual effect of the board. In addition, in the case where the amount of liquid resin coated above the underlying wood grain layer is large, peeling and falling off may even occur between the underlying wood grain layer and the board surface, which seriously reduces the yield of the product.

Therefore, in order to overcome the above problems, in the present invention, at least a portion of the surface of the underlying wood grain layer is first covered with liquid resin and this portion of liquid resin is cured first to form a wood grain substrate. Since the amount of this portion of liquid resin is small at this time, the internal stress generated after curing is weak and will not affect the underlying wood grain layer and the board surface.

Since the liquid resin used to form the three-dimensional wood grain layer is further covered above the wood grain substrate and cured to obtain the three-dimensional wood grain layer, the affinity and bonding force between the wood grain substrate and the three-dimensional wood grain layer are strong, so no slippage or peeling problems will occur between the two. Moreover, since the wood grain substrate has high mechanical strength after curing, the internal stress generated during the curing of the three-dimensional wood grain layer is not enough to cause deformation of the wood grain substrate, and thus will not transmit the internal stress generated during the curing of the three-dimensional wood grain layer to the underlying wood grain layer below the wood grain substrate. Therefore, by adding this pretreatment step, the problem of inaccurate alignment between the three-dimensional wood grain layer and the underlying wood grain layer in the subsequent production process can be effectively prevented.

Preferably, the curing method of the curable liquid resin includes thermosetting or photopolymerization.

Preferably, when the curing method of the curable liquid resin is thermosetting, the liquid resin includes at least a thermosetting resin.

Preferably, the thermosetting resin includes one or more combinations of epoxy resin, phenolic resin, melamine formaldehyde resin, furan resin, unsaturated polyester resin, silicone resin, and polybutadiene resin.

Preferably, the resin liquid further includes a curing agent.

Preferably, when the curing method of the curable liquid resin is photopolymerization, the liquid resin includes at least a photocrosslinkable resin and a photoinitiator.

In another preferred embodiment of the present invention, the photocrosslinkable resin includes any one or more combinations of unsaturated polyester, epoxy resin, acrylic resin, acrylic-modified polyurethane resin, acrylic-modified silicone resin, acrylic-modified epoxy resin, waterborne epoxy acrylate, waterborne polyurethane acrylate, and waterborne polyester acrylate.

In another preferred embodiment of the present invention, the photoinitiator includes any one of free radical polymerization initiator, cationic polymerization initiator, energy transfer type initiator, and ionic reaction type initiator.

Preferably, after the three-dimensional wood grain layer is prepared, it further includes:
a step of covering at least a portion of the surface of the three-dimensional wood grain layer with a topcoat and curing to obtain a topcoat layer.

Preferably, before the step (S.3), the board further includes the following step:
a step of covering at least a portion of the surface of the board with a primer and curing to obtain a primer layer.

In a second aspect, the present invention further provides a board having a three-dimensional wood grain on the surface thereof, which is prepared by the method as described above.

In a third aspect, the present invention further provides the use of the board having a three-dimensional wood grain on the surface thereof as described above in flooring, decorative wall panels, or ceiling panels.

The present invention has the following beneficial effects:

The present invention obtains a surface database of natural wood by scanning real natural wood, and further classifies and processes these surface databases, thereby further obtaining an underlying wood grain printing dataset for forming an underlying wood grain layer adapted to the background color and pattern of the natural wood grain and a three-dimensional wood grain printing dataset for forming a three-dimensional wood grain having the same hand feel as the natural wood grain. Through the corresponding matching relationship between the underlying wood grain printing dataset and the three-dimensional wood grain printing dataset, a three-dimensional wood grain layer completely corresponding to the underlying wood grain layer can be obtained on the surface of the board, thereby effectively improving the alignment accuracy between the two. At the same time, since the present application processes different shapes, colors, and depth information separately, the preparation process of the three-dimensional wood grain layer is simplified, and the production efficiency is improved.

### BRIEF DESCRIPTION OF THE DRAWINGS

FIG. 1 is a schematic diagram of a typical structure of natural wood.
FIG. 2 is image data adapted to the scanned natural wood image.
FIG. 3 is a schematic reproduction diagram of steps (S.1) to (S.11) in Example 1.
FIG. 4 is a schematic reproduction diagram of steps (S.12) to (S.13) in Example 1.
FIG. 5 is a schematic diagram of the stereoscopic structure of the board having a three-dimensional wood grain prepared in Example 1.
FIG. 6 is a schematic diagram of the top view structure of the board having a three-dimensional wood grain prepared in Example 1.
FIG. 7 is a schematic reproduction diagram of steps (S.1) to (S.9) in Example 2.

Wherein: board 10, primer layer 11, color paint layer 12, underlying wood grain layer 13, three-dimensional wood grain substrate 14, liquid resin layer 15, wood grain precursor 16, three-dimensional wood grain layer 17, first topcoat layer 18, second topcoat layer 19, conveying equipment 20, first roller coating machine 21, second roller coating machine 22, first printing device 23, third roller coating machine 24, fourth roller coating machine 25, fifth roller coating machine 26, second printing device 27, cleaning device 28, sixth roller coating machine 29, seventh roller coating machine 30, wood surface database 100, underlying wood grain printing dataset 110, underlying wood grain printing background color data subset 110a, underlying wood grain printing shape data subset 110b, three-dimensional wood grain printing dataset 120, three-dimensional wood grain printing shape data subset 120a, three-dimensional wood grain printing depth data subset 120b.

### DETAILED DESCRIPTION OF THE EMBODIMENTS

The present invention is further described below in conjunction with the accompanying drawings and specific examples. Those of ordinary skill in the art will be able to implement the present invention based on these descriptions. In addition, the embodiments of the present invention involved in the following descriptions are usually only some embodiments of the present invention, not all embodiments. Therefore, based on the embodiments of the present invention, all other embodiments obtained by those of ordinary skill in the art without creative labor shall fall within the protection scope of the present invention.

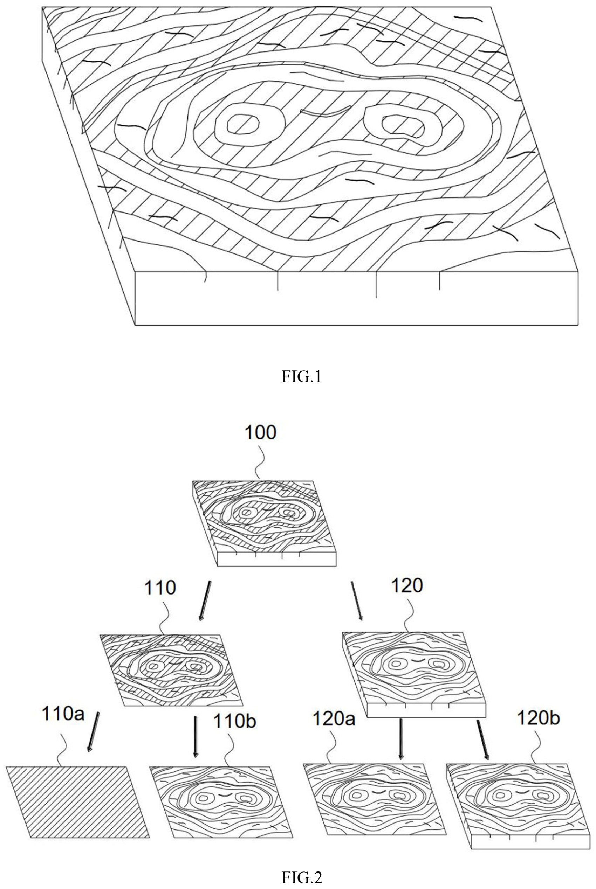

In the first embodiment of the present invention, a scanner is first used to scan multiple different natural woods (FIG. 1 is a schematic diagram of a typical structure of natural wood), thereby obtaining wood grain information of multiple different natural woods, the wood grain information including image data of the wood grain and stereoscopic depth information of the wood grain, the image data including background color images displayed by various woods and wood grain shape images that can be displayed on the surface of various woods. Among them, the background color images usually include background colors that various natural woods can present themselves, for example, common natural wood background color images generally include but are not limited to: fir and spruce present light yellow background color; linden wood, white sal double, yellow paulownia, and other woods present yellowish-white background color; locust tree, yellow wood, zelkova, and mulberry tree present brown background color; red fir, red pine, cryptomeria, and camphor wood present reddish-brown background color; rosewood, Indian rosewood, and Indian rosewood present dark purplish-red background color; ebony presents black background color. For example, common natural wood wood grain shape images include but are not limited to: closed, semi-closed, or fully open annual ring textures, semi-ring hole structures, strip structures, ripple structures, tree knot textures, and other structures. For the above obtained background color images and wood grain shape images, they are processed by image processing software, for example, for the background color images, color and/or brightness and/or contrast correction is performed, and for the wood grain shape images, at least one of operations such as geometric transformation, removal of unnecessary image elements, image skew, and image distortion is performed, and then the processed wood grain information is analyzed to extract and establish the wood surface database 100.

As can be seen from FIG. 2, in this embodiment, the data in the wood surface database 100 can be at least divided into the underlying wood grain printing dataset 110 and the three-dimensional wood grain printing dataset 120.

Among them, the underlying wood grain printing dataset 110 is used to record background color information on the wood surface and shape information of the wood grain on the wood surface. Therefore, in some embodiments, the underlying wood grain printing dataset 110 can be further classified, thereby dividing the underlying wood grain printing dataset 110 into a plurality of underlying wood grain printing background color data subsets 110a and a plurality of underlying wood grain printing shape data subsets 110b.

The underlying wood grain printing background color data subset 110a may include a plurality of background color printing point coordinate data (X,Y), each background color printing point coordinate data (X,Y) being marked with color information matching different colors of the wood grain pattern, and these color information constituting the background color being obtained by superimposing at least one or more standard colors.

The underlying wood grain printing shape data subset 110b includes a plurality of sets of a plurality of two-dimensional planar wood grain printing coordinate data for printing wood grains, each planar wood grain printing coordinate data being marked with color information, these color information constituting the wood grain also being obtained by superimposing at least one or more standard colors, and the color information constituting the wood grain being distinguishable from the color information constituting the background color, so that the shape of the underlying wood grain can be displayed on the background color. After determining the planar wood grain printing coordinate data, each underlying wood grain printing shape data subset 110b can correspond to one underlying wood grain printing path.

In some preferred embodiments, the standard colors constituting the background color and wood grain color are at least presented individually by a series of colors such as red, blue, light red, yellow, black, light black, or obtained by superimposing multiple standard colors. As an example, these standard colors and their corresponding RGB values are shown in Table 1 below:

**Table 1**

| Standard Color | RGB Value |
|---|---|
| Red | 153,0,0 |
| Blue | 0,51,153 |
| Light Red | 255,102,51 |
| Yellow | 255,255,102 |
| Black | 51,51,51 |
| light black | 102,102,102 |

In order to output colored ink on the surface of the board to form an underlying wood grain layer matching the wood grain pattern, in this embodiment, the underlying wood grain printing background color data subset 110a and the underlying wood grain printing shape data subset 110b are assigned to the first printing device 200, so that the first printing device 200 prints on the surface of the board based on the background color printing point coordinate data recorded in the underlying wood grain printing background color data subset 110a and the color information corresponding to the background color printing point coordinate data, thereby outputting colored ink for forming the required background color on the surface of the board to form the background color.

After the background color printing is completed, the first printing device 200 prints on the surface of the background color based on a plurality of sets of planar wood grain printing coordinate data for printing wood grains recorded in the underlying wood grain printing shape data subset 110b and the color information corresponding to the planar wood grain printing coordinate data, according to the underlying wood grain printing path corresponding to each underlying wood grain printing shape data subset 110b, thereby outputting colored ink for forming the wood grain shape on the surface of the background color and forming the wood grain shape.

After both the background color and the wood grain shape are printed, the background color and the wood grain shape are superimposed on each other to form an underlying wood grain layer matching the target wood grain pattern. In order to ensure the overall clarity of the underlying wood grain layer after printing, the first printing device 200 needs to maintain a printing resolution of at least 100 DPI during the process of printing the planar wood grain printing coordinate data for forming the background color and the planar wood grain printing coordinate data for forming the wood grain shape.

The colored ink used in the first printing device 200 is preferably ink that can be photopolymerized. After printing, photopolymerization treatment is performed on the formed underlying wood grain layer, thereby maintaining the stability and wear resistance of the underlying wood grain layer. In order to ensure the photopolymerizable performance of the colored ink, in this embodiment, the colored ink must include a photocurable resin, a photoinitiator for initiating curing of the photocurable resin, and a pigment for providing different colors.

In addition, since the source of the board used in this embodiment can be wood-plastic board, stone-plastic board, wood board, metal board, or other types of boards, and the colors carried by various boards themselves are different, after printing and forming the underlying wood grain layer on the surface of different boards, the color carried by the board itself will cause a certain offset in the color of the underlying wood grain layer. Therefore, in some preferred embodiments of the present application, it is necessary to first perform certain surface modification treatment on the board.

The modification treatment of the board surface includes the following steps:
The formed SPC board is first coated with a layer of curable primer (as an example, the primer may include: 90% photopolymerizable clear varnish HYS01-1, 5% photoinitiator 184, 0.5% photoinitiator TPO, 4.5% diluent hydroxyethyl acrylate). During the process of the SPC board contacting the coating roller, 12g/m² of primer is coated on the surface of the SPC board, and cured with a 395nm and 8W/cm² UV lamp, so that the primer forms a primer layer.

The SPC board obtained in the previous step is then passed through a roller coating machine, the coating roller surface of which is attached with photopolymerizable white paint (as an example, the white paint includes: 50% photopolymerizable epoxy HYS01-1, 30% titanium dioxide, 5% photoinitiator 184, 0.5% photoinitiator TPO, 14.5% diluent hydroxyethyl acrylate). During the process of the SPC board contacting the coating roller, 18g/m² of white paint is coated on the surface of the primer, and cured with a 395nm and 8W/cm² UV lamp to obtain a white color paint layer.

The first printing device 200 outputs on the surface of the white color paint layer, thereby forming an underlying wood grain layer on the surface of the color paint layer to mask the influence of the inherent color of the SPC board on the underlying wood grain layer.

Continuing as shown in FIG. 2, the three-dimensional wood grain printing dataset 120 is used to record the shape information of the three-dimensional wood grain on the wood surface and different depth information of the three-dimensional wood grain. Therefore, in some embodiments, the three-dimensional wood grain printing dataset 120 can be classified, thereby dividing the three-dimensional wood grain printing dataset 120 into a plurality of two-dimensional three-dimensional wood grain printing shape data subsets 120a and a plurality of three-dimensional wood grain printing depth data subsets 120b.

The three-dimensional wood grain printing shape data subset 120a includes a plurality of three-dimensional wood grain printing coordinate data for printing wood grains, each three-dimensional wood grain printing shape data subset 120a corresponding to one three-dimensional wood grain printing path. The three-dimensional wood grain printing depth data subset 120b includes printing depth data for each three-dimensional printing point coordinate data.

In order to form a three-dimensional wood grain adapted to the wood grain shape in the underlying wood grain layer on the surface of the underlying wood grain layer, in this embodiment, the three-dimensional wood grain printing shape data subset 120a and a plurality of three-dimensional wood grain printing depth data subsets 120b in the three-dimensional wood grain printing dataset 120 are respectively assigned to the second printing device 300, thereby forming the three-dimensional wood grain during the printing process of the second printing device 300.

As described in the background art, there are various methods for forming a three-dimensional wood grain, so the method of using the second printing device 300 to print the three-dimensional wood grain also needs to be described separately.

For the preferred embodiment steps of forming a three-dimensional wood grain using the upward stacking method:
(1) Preparing wood grain precursor liquid: In this embodiment, since the wood grain precursor liquid needs to be stacked upward to form a three-dimensional wood grain, the wood grain precursor liquid used must include at least a curable resin and a photoinitiator (as an example, the wood grain precursor liquid applied to the upward stacking method may include 90% Dow Corning 65 Additive, 5% photoinitiator 184, 0.5% photoinitiator TPO, 4.5% diluent hydroxyethyl acrylate).
(2) The second printing device 300 prints on the surface of the underlying wood grain layer based on the three-dimensional printing point coordinate data corresponding to the three-dimensional wood grain printing shape data subset 120a and the three-dimensional wood grain printing path corresponding to each three-dimensional wood grain printing shape data subset 120a, thereby outputting the wood grain precursor liquid on the surface of the background color. The height of the wood grain precursor liquid can be controlled by the second printing device 300 applying the three-dimensional wood grain printing depth data subset 120b, thereby ultimately forming the wood grain precursor in the process of continuous stacking of the wood grain precursor liquid. In this embodiment, a plurality of three-dimensional wood grain printing paths corresponding to the three-dimensional wood grain printing shape data subsets 120a respectively coincide with a plurality of underlying wood grain printing paths on a two-dimensional plane, thereby completing the alignment between the three-dimensional wood grain and the underlying wood grain.
(3) The wood grain precursor is sequentially irradiated with a 395nm and 8W/cm² UV lamp and a 160w/cm² Hg lamp, so that the liquid wood grain precursor is transformed into a cured three-dimensional wood grain layer.

For the preferred embodiment steps of forming a three-dimensional wood grain using the downward embossing method:
(1) Preparing wood grain precursor liquid: In this embodiment, since the wood grain precursor liquid needs to penetrate downward into the interior of the liquid resin layer to form a three-dimensional wood grain, the wood grain precursor liquid used must include at least a polymerization inhibitor that hinders or delays the polymerization of the resin liquid layer (as an example, the wood grain precursor liquid applied to the upward stacking method includes: 45.5% diacrylate monomer PEG600DA, 20.5% hydroquinone monomethyl ether HQMME, 10% 2-tert-butylhydroquinone MTBHQ, 24% diethylene glycol monobutyl ether).
(2) By means of a coating tool, a curable liquid resin is coated over the underlying wood grain layer, the coating amount of the curable liquid resin can be 50~200g/m², and when the coating amount of the cured liquid resin is greater than 150g/m², it can be coated in multiple times, thereby forming a liquid resin layer.
(3) The second printing device 300 prints on the surface of the liquid resin layer based on the three-dimensional wood grain printing coordinate data corresponding to the three-dimensional wood grain printing shape data subset 120a and the three-dimensional wood grain printing path corresponding to each three-dimensional wood grain printing shape data subset 120a, thereby outputting the wood grain precursor liquid on the surface of the liquid resin layer. The depth of the wood grain precursor liquid can be controlled by the second printing device 300 applying the three-dimensional wood grain printing depth data subset 120b, thereby causing the wood grain precursor liquid and/or at least a portion of the liquid resin mixed with the wood grain precursor liquid and/or at least a portion of the liquid resin covered by the wood grain precursor liquid to form the wood grain precursor. In this embodiment, a plurality of three-dimensional wood grain printing paths corresponding to the three-dimensional wood grain printing shape data subsets 120a respectively coincide with a plurality of underlying wood grain printing paths on a two-dimensional plane, thereby completing the alignment between the three-dimensional wood grain and the underlying wood grain.
(4) The liquid resin layer on the surface of the SPC board obtained in the previous step is sequentially irradiated with a 395nm and 8W/cm² UV lamp and a 160w/cm² Hg lamp for deep curing, and then the obtained SPC board is conveyed to a cleaning device containing a steel brush, so that the wood grain precursor is brushed out by the steel brush, thereby forming a three-dimensional wood grain layer.

In some preferred embodiments, in order to improve the wear resistance and scratch resistance of the underlying wood grain layer and to make the three-dimensional wood grain layer have better stereoscopic effect and visual effect, immediately after obtaining the underlying wood grain layer, a pretreatment step is followed, the pretreatment step including:
a step of covering at least a portion of the surface above the underlying wood grain layer with a curable liquid resin and curing it. About 45g/m² of photopolymerizable resin liquid (the resin liquid includes: 90% Dow Corning 65 Additive, 5% photoinitiator 184, 0.5% photoinitiator TPO, 4.5% diluent hydroxyethyl acrylate) is roller coated, and it is sequentially irradiated with a 395nm and 8W/cm² UV lamp and a 160w/cm² Hg lamp for curing to form a wood grain substrate. Subsequently, the formation of the three-dimensional wood grain layer is obtained above the wood grain substrate.

In some preferred embodiments, in order to improve the touch feel of the board and adjust the optical properties, after preparing the three-dimensional wood grain layer, at least one layer of topcoat is further coated on the surface of the three-dimensional wood grain layer and cured to obtain a topcoat layer.

### Example 1

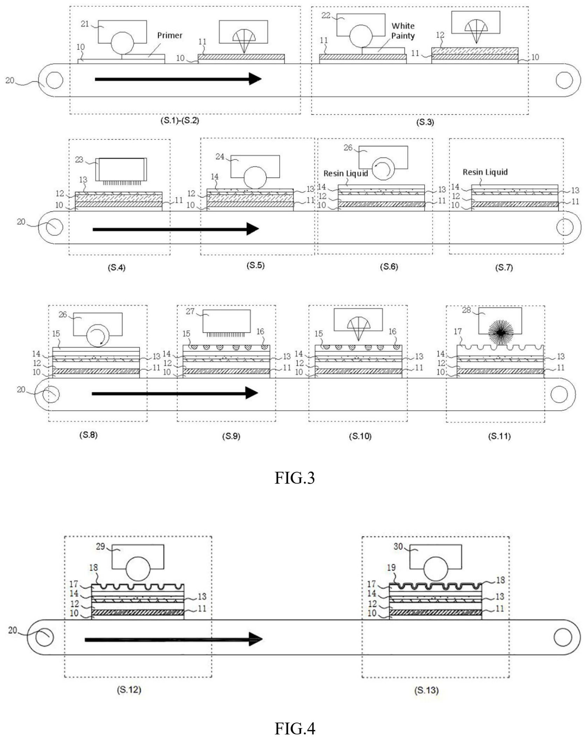

As shown in FIG. 3, a method for manufacturing a board having a three-dimensional wood grain on the surface thereof includes the following steps:
(S.1) placing an SPC board 10 with length, width, and thickness of 1260mm*970mm*4.85mm on the surface of a conveying equipment 20 moving in a fixed direction;
(S.2) during the conveying process of the SPC board 10, it first passes through the first roller coating machine 21, the coating roller surface of which is attached with photopolymerizable primer (the primer includes: 90% photopolymerizable clear varnish HYS01-1, 5% photoinitiator 184, 0.5% photoinitiator TPO, 4.5% diluent hydroxyethyl acrylate), during the process of the SPC board 10 contacting the coating roller, 12g/m² of primer is coated on the surface of the SPC board 10, and cured with a 395nm and 8W/cm² UV lamp, so that the primer forms a primer layer 11;
(S.3) the SPC board 10 obtained in the previous step then passes through the second roller coating machine 22, the coating roller surface of which is attached with photopolymerizable white paint (the white paint includes: 50% photopolymerizable epoxy HYS01-1, 30% titanium dioxide, 5% photoinitiator 184, 0.5% photoinitiator TPO, 14.5% diluent hydroxyethyl acrylate), during the process of the SPC board 10 contacting the coating roller, 18g/m² of white paint is coated on the surface of the primer layer 11, and cured with a 395nm and 8W/cm² UV lamp to obtain a white color paint layer 12;
(S.4) the SPC board 10 obtained in the previous step is conveyed to the first printing device 23, the first printing device 50 calls the underlying wood grain printing background color data subset 110a and the underlying wood grain printing shape data subset 110b in the underlying wood grain printing dataset 110, thereby spraying 6-8 g/m² of ink on the surface of the color paint layer 12 through the first printing device 50, and after curing the ink, forming an underlying wood grain layer 13 matching the wood grain information on the surface of the primer layer 11;
(S.5) the SPC board 10 obtained in the previous step is conveyed to the third roller coating machine 24, 45g/m² of photopolymerizable resin liquid (the resin liquid includes: 90% Dow Corning 65 Additive, 5% photoinitiator 184, 0.5% photoinitiator TPO, 4.5% diluent hydroxyethyl acrylate) is roller coated on the surface of the underlying wood grain layer 13, and it is sequentially irradiated with a 395nm and 8W/cm² UV lamp and a 160w/cm² Hg lamp for curing to form a three-dimensional wood grain substrate 14;
(S.6) the SPC board 10 obtained in the previous step is conveyed to the fourth roller coating machine 25, so that the coating roller of the fourth roller coating machine roller coats 80g/m² of resin liquid (the resin liquid includes: 90% Dow Corning 65 Additive, 5% photoinitiator 184, 0.5% photoinitiator TPO, 4.5% diluent hydroxyethyl acrylate) on the wood grain substrate surface along the conveying direction of the SPC board 10 (the rotation direction of the roller itself is clockwise);
(S.7) after coating the first layer of resin liquid, the SPC board 10 is conveyed forward along the surface of the conveying equipment 20, and it is ensured that before being conveyed to the next roller coating machine, the fourth roller coating machine 80 does not apply any force to the resin liquid;
(S.8) the SPC board 10 obtained in the previous step is conveyed to the fifth roller coating machine 26, so that the coating roller of the fifth roller coating machine 90 continues to roller coat 75g/m² of resin liquid against the conveying direction of the SPC board 10 (the rotation direction of the roller itself is clockwise), thereby obtaining a liquid resin layer 15;
(S.9) the SPC board 10 obtained in the previous step is conveyed to the second printing device 27, the second printing device 27 calls the three-dimensional wood grain printing shape data subset 120a and the three-dimensional wood grain printing depth data subset 120b in the three-dimensional wood grain printing dataset 120, thereby spraying 6-8 g/m² of wood grain precursor liquid (the wood grain precursor liquid includes: 45.5% diacrylate monomer PEG600DA, 20.5% hydroquinone monomethyl ether HQMME, 10% 2-tert-butylhydroquinone MTBHQ, 24% diethylene glycol monobutyl ether) on the surface of the liquid resin layer 15, and causing the wood grain precursor liquid to penetrate downward into the liquid resin layer 15 and mix with the curable liquid resin to form a wood grain precursor 16, the depth variation of the wood grain precursor 16 corresponding to the three-dimensional wood grain printing depth data subset 120b;
(S.10) the portion of the liquid resin on the surface of the SPC board 10 obtained in the previous step except the wood grain precursor 16 is sequentially irradiated with a 395nm and 8W/cm² UV lamp and a 160w/cm² Hg lamp for deep curing;
(S.11) the SPC board 10 obtained in the previous step is conveyed to a cleaning device 28 containing a steel brush, so that the wood grain precursor 16 is brushed out by the steel brush, thereby forming a three-dimensional wood grain layer 17;

As shown in FIG. 4, after the preparation of the three-dimensional wood grain layer 17 is completed, the following steps are continued:
(S.12) the SPC board 10 obtained in the previous step passes through the sixth roller coating machine 29 and a 395nm and 8W/cm² UV ultraviolet lamp, thereby coating 12g/m² of first topcoat on the surface of the three-dimensional wood grain layer and curing it to obtain a first topcoat layer 18;
(S.13) the SPC board 10 obtained in the previous step passes through the seventh roller coating machine 30 and a 395nm and 8W/cm² UV ultraviolet lamp, thereby coating 12g/m² of second topcoat on the surface of the first topcoat layer 17 and curing it to obtain a second topcoat layer 19.

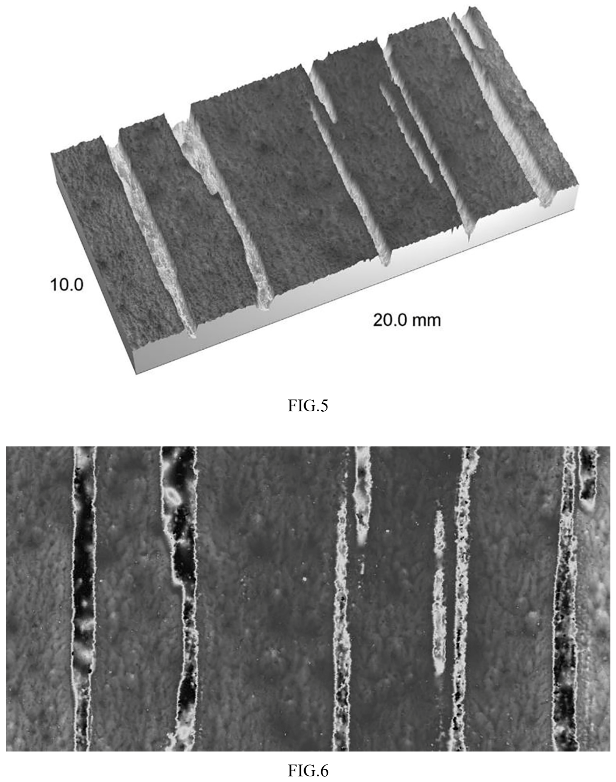

The board 10 having a three-dimensional structure on the surface prepared in Example 1 was analyzed by a laser profilometer to obtain FIGS. 5 and 6, wherein: FIG. 5 is a schematic diagram of the stereoscopic structure of the three-dimensional wood grain, and FIG. 6 is a schematic diagram of the top view structure of the three-dimensional wood grain.

### Example 2

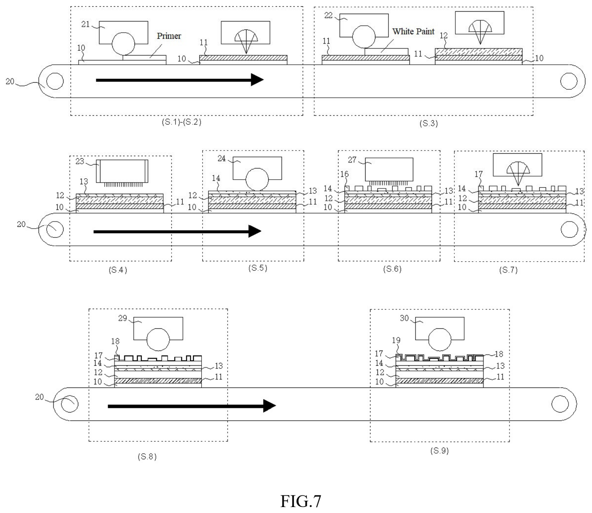

As shown in FIG. 7, a method for manufacturing a board having a three-dimensional wood grain on the surface thereof includes the following steps:
(S.1) placing an SPC board 10 with length, width, and thickness of 1260mm*970mm*4.85mm on the surface of a conveying equipment 20 moving in a fixed direction;
(S.2) during the conveying process of the SPC board 10, it first passes through the first roller coating machine 21, the coating roller surface of which is attached with photopolymerizable primer (the primer includes: 90% photopolymerizable clear varnish HYS01-1, 5% photoinitiator 184, 0.5% photoinitiator TPO, 4.5% diluent hydroxyethyl acrylate), during the process of the SPC board 10 contacting the coating roller, 12g/m² of primer is coated on the surface of the SPC board 10, and cured with a 395nm and 8W/cm² UV lamp, so that the primer forms a primer layer 11;
(S.3) the SPC board 10 obtained in the previous step then passes through the second roller coating machine 22, the coating roller surface of which is attached with photopolymerizable white paint (the white paint includes: 50% photopolymerizable epoxy HYS01-1, 30% titanium dioxide, 5% photoinitiator 184, 0.5% photoinitiator TPO, 14.5% diluent hydroxyethyl acrylate), during the process of the SPC board 10 contacting the coating roller, 18g/m² of white paint is coated on the surface of the primer layer 11, and cured with a 395nm and 8W/cm² UV lamp to obtain a white color paint layer 12;
(S.4) the SPC board 10 obtained in the previous step is conveyed to the first printing device 23, the first printing device 50 calls the underlying wood grain printing background color data subset 110a and the underlying wood grain printing shape data subset 110b in the underlying wood grain printing dataset 110, thereby spraying 6-8 g/m² of ink on the surface of the color paint layer 12 through the first printing device 50, and after curing the ink, forming an underlying wood grain layer 13 matching the wood grain information on the surface of the primer layer 11;
(S.5) the SPC board 10 obtained in the previous step is conveyed to the third roller coating machine 24, 45g/m² of photopolymerizable resin liquid (the resin liquid includes: 90% Dow Corning 65 Additive, 5% photoinitiator 184, 0.5% photoinitiator TPO, 4.5% diluent hydroxyethyl acrylate) is roller coated on the surface of the underlying wood grain layer 13, and it is sequentially irradiated with a 395nm and 8W/cm² UV lamp and a 160w/cm² Hg lamp for curing to form a three-dimensional wood grain substrate 14;
(S.6) the SPC board 10 containing the three-dimensional wood grain substrate 14 obtained in the previous step is conveyed to the second printing device 27, the second printing device 27 calls the three-dimensional wood grain printing shape data subset 120a and the three-dimensional wood grain printing depth data subset 120b in the three-dimensional wood grain printing dataset 120, thereby spraying 6-8 g/m² of wood grain precursor liquid (the wood grain precursor liquid includes: 90% Dow Corning 65 Additive, 5% photoinitiator 184, 0.5% photoinitiator TPO, 4.5% diluent hydroxyethyl acrylate) on the surface of the liquid resin layer 15, thereby forming a wood grain precursor 16, the depth variation of the wood grain precursor 16 corresponding to the three-dimensional wood grain printing depth data subset 120b;
(S.7) the wood grain precursor 16 on the surface of the SPC board 10 obtained in the previous step is sequentially irradiated with a 395nm and 8W/cm² UV lamp and a 160w/cm² Hg lamp for deep curing, thereby forming a three-dimensional wood grain layer 17;
(S.8) the SPC board 10 obtained in the previous step passes through the sixth roller coating machine 29 and a 395nm and 8W/cm² UV ultraviolet lamp 30, thereby coating 12g/m² of first topcoat on the surface of the three-dimensional wood grain layer 17 and curing it to obtain a first topcoat layer 18;
(S.9) the SPC board 10 obtained in the previous step passes through the seventh roller coating machine 30 and a 395nm and 8W/cm² UV ultraviolet lamp 31, thereby coating 12g/m² of second topcoat on the surface of the first topcoat layer 17 and curing it to obtain a second topcoat layer 19.

In summary, through the method described in the present application, a three-dimensional wood grain similar to that of a natural wood board can be obtained on the surface of an artificial or non-wooden board, and by digitizing and processing the wood grain information, the underlying wood grain layer and the three-dimensional wood grain above the underlying wood grain layer can be strictly corresponded during the printing process, thereby overcoming the problem of difficulty in "alignment" in the prior art.

At the same time, based on the above principle, this method in the present application also has the advantage of high flexibility. Compared with the prior art, the three-dimensional wood grain in the present application does not require three-dimensional modeling of a single underlying wood grain layer, and only needs to analyze the wood grain shape contained in the underlying wood grain layer, retrieve it from the three-dimensional wood grain printing shape data subset of the three-dimensional wood grain printing dataset through the wood grain shape, and match the shape data recorded in the three-dimensional wood grain printing shape data subset with the depth data recorded in the three-dimensional wood grain printing depth data subset, thereby creating a three-dimensional wood grain closer to the natural wood grain, thereby effectively simplifying the construction process of the three-dimensional wood grain, enabling customized production of products according to customer needs, expanding the richness of the enterprise's product line, effectively reducing production costs, and improving production efficiency.

## Claims

1. A method for manufacturing a board having a three-dimensional wood grain on the surface thereof, the method comprising the steps of:
(5.1) obtaining wood grain information and processing the information to generate a wood surface database; the database including at least an underlying wood grain printing dataset and a three-dimensional wood grain printing dataset; wherein the three-dimensional wood grain printing dataset includes a two-dimensional three-dimensional wood grain printing shape data subset corresponding to the underlying wood grain printing dataset and a three-dimensional wood grain printing depth data subset corresponding to the three-dimensional wood grain printing shape data subset;
(5.2) assigning the underlying wood grain printing dataset to a first printing device; assigning the three-dimensional wood grain printing dataset to a second printing device;
(5.3) using the first printing device to output on the surface of the board using the underlying wood grain printing dataset, to obtain an underlying wood grain layer matching the wood grain information;
(5.4) using the second printing device to output wood grain precursor liquid using the three-dimensional wood grain printing dataset, to obtain a wood grain precursor for forming a three-dimensional wood grain matching the underlying wood grain layer, and the height of the wood grain precursor corresponding to different three-dimensional wood grain printing depth data subsets.

2. The method according to claim 1, wherein the underlying wood grain printing dataset includes a plurality of underlying wood grain printing background color data subsets and a plurality of underlying wood grain printing shape data subsets.

3. The method according to claim 2, wherein the underlying wood grain printing background color data subset includes a plurality of background color printing point coordinate data, each background color printing point coordinate data being marked with color information, and the first printing device performs printing based on the background color printing point coordinate data and the color information corresponding to the background color printing point coordinate data.

4. The method according to claim 2, wherein the underlying wood grain printing shape data subset includes a plurality of sets of two-dimensional planar wood grain printing coordinate data for printing wood grains, each planar wood grain printing coordinate data being marked with color information, the first printing device performs printing based on the planar wood grain printing coordinate data and the color information corresponding to the planar wood grain printing coordinate data, and each underlying wood grain printing shape data subset corresponds to one underlying wood grain printing path.

5. The method according to claim 2 or 3 or 4, wherein the color information marked in the underlying wood grain printing background color data subset and the underlying wood grain printing shape data subset is obtained by superimposing at least one or more standard colors.

6. The method according to claim 5, wherein the standard colors include at least red, blue, light red, yellow, black, and light black.

7. The method according to claim 6, wherein the printing resolution of the background color printing point coordinate data and the planar wood grain printing coordinate data is at least 100 DPI.

8. The method according to claim 4, wherein the three-dimensional wood grain printing shape data subset includes a plurality of two-dimensional three-dimensional wood grain printing coordinate data for printing wood grains, each three-dimensional wood grain printing shape data subset corresponding to one three-dimensional wood grain printing path, and a plurality of three-dimensional wood grain printing paths respectively coinciding with a plurality of underlying wood grain printing paths.

9. The method according to claim 8, wherein the three-dimensional wood grain printing shape data subset includes printing depth data for each three-dimensional wood grain printing coordinate data.

10. The method according to claim 1, wherein the wood grain information is obtained by scanning a natural wood board.

11. The method according to claim 1 or 10, wherein in the step (5.1), the wood grain information processing includes at least one of the following operations: geometric transformation, correction of color and/or brightness and/or contrast, removal of unnecessary image elements, image skew, image distortion.

12. The method according to claim 1, further comprising, after the step (S.4): curing the wood grain precursor, thereby forming a three-dimensional wood grain layer on the surface of the underlying wood grain layer.

13. The method according to claim 12, wherein the wood grain precursor includes at least a photocurable resin; and a photoinitiator for initiating polymerization of the photocurable resin.

14. The method according to claim 1, further comprising, between the step (5.3) and the step (S.4), an intermediate step including: applying a curable liquid resin over the underlying wood grain layer, thereby forming a liquid resin layer; wherein in the step (5.4), the wood grain precursor liquid is applied to the upper surface of the liquid resin layer, thereby causing the wood grain precursor liquid and/or at least a portion of the liquid resin mixed with the wood grain precursor liquid and/or at least a portion of the liquid resin covered by the wood grain precursor liquid to form the wood grain precursor.

15. The method according to claim 14, wherein the wood grain precursor liquid includes at least a polymerization inhibitor for preventing or delaying polymerization of the curable liquid resin.

16. The method according to claim 14, further comprising, after the step (S.4): curing the liquid resin other than the wood grain precursor formed in the previous step; and removing the wood grain precursor, thereby forming a three-dimensional wood grain layer on the surface of the underlying wood grain layer.

17. The method according to any one of claims 12 to 16, further comprising, immediately after the end of the step (5.3), a pretreatment step including: covering at least a portion of the surface above the underlying wood grain layer with a curable liquid resin, and curing at least a portion of the resin liquid on the surface of the underlying wood grain layer to form a three-dimensional wood grain substrate.

18. The method according to claim 12 or 16, further comprising, after the three-dimensional wood grain layer is prepared: covering at least a portion of the surface of the three-dimensional wood grain layer with a topcoat and curing to obtain a topcoat layer.

19. The method according to claim 1 or 12 or 14, wherein, before the step (5.3), the board further includes: covering at least a portion of the surface of the board with a primer and curing to obtain a primer layer.

20. A board having a three-dimensional wood grain on the surface thereof, produced by the method of any one of claims 1-19.

21. A flooring, decorative wall panel, or ceiling panel comprising the board of claim 20.
